# EUROPÄISCHE PATENTSCHRIFT

(11) **EP 2 502 082 B1**
(45) Veröffentlichungstag und Bekanntmachung des Hinweises auf die Patenterteilung: **22.04.2015**
(21) Anmeldenummer: 10784466.4
(22) Anmeldetag: 15.11.2010
(51) Int. Cl.: G01N 35/04, G01N 35/02

(54) **ANALYSESYSTEM UND ANALYSEVERFAHREN**
ANALYSIS SYSTEM AND ANALYSIS METHOD
SYSTÈME D'ANALYSE ET PROCÉDÉ D'ANALYSE

(30) Priorität: 16.11.2009 EP 09176148
(43) Veröffentlichungstag der Anmeldung: 26.09.2012
(73) Patentinhaber: BIT Analytical Instruments GmbH, 65824 Schwalbach (DE)
(72) Erfinder: BALGER, Marius, 65193 Wiesbaden (DE); LANG, Alfred, 82386 Oberhausen (DE)
(74) Vertreter: Staudt, Armin Walter
(86) Internationale Anmeldenummer: PCT/EP2010/067465
(87) Internationale Veröffentlichungsnummer: WO 2011/058169

(56) Entgegenhaltungen:
- EP-A1- 1 310 303
- EP-A1- 1 637 886
- EP-A2- 1 255 115
- DE-A1- 4 128 698
- US-A- 5 358 691
- US-A1- 2002 085 959
- US-A1- 2009 004 057

## Beschreibung

Die Erfindung betrifft ein Verfahren zur automatisierten Analyse einer Probe, insbesondere unter Einsatz eines Ein-Rotoren-Analysesystems, insbesondere im medizinischen Bereich, indem die zu bestimmende, in einem Probengefäß bereitgestellte Probe mittels einer Pipettiervorrichtung, die über eine Hub-/Schwenkeinrichtung bewegt wird, einem Reaktionsbehälter und/oder einer Messküvette zugeführt wird, welche in einem Prozessrotor zusammen mit mindestens einem Reagenzbehälter mit einem darin enthaltenen Reagenz bereitgestellt, und anschließend in einer Messküvette nach Durchführung einer testspezifischen Abfolge von Analyseschritten unter Einsatz des mindestens einen Reagenzes einer Messeinrichtung zur Bestimmung einer physikalischen Eigenschaft der Probe zugeführt wird.

### Stand der Technik

Die klinischen Diagnostik umfasst biochemische Analysen, die auf Enzymreaktionen und anderen chemischen Reaktionen zum Analysieren von Zuckern, Fetten, Proteinen und dergleichen beruhen, sowie immunchemische Analysen, die spezifische Wechselwirkungen zwischen Antigenen und Antikörpern voraussetzen, um Hormone, Tumormarker und dergleichen zu detektieren.

Sowohl für Analysen im Bereich der klinisch-chemischen Diagnose als auch für immunlogischen Diagnosemethoden stehen automatische Analyseeinrichtungen zur Verfügung. Diese unterscheiden sich wegen der jeweils grundsätzlich unterschiedlichen Analysemethoden deutlich voneinander.

So sind für den Bereich der klinischen Chemie nasschemische Analysensysteme weit verbreitet, bei denen flüssige Reagenzien in Reagenzienbehältern bereitgestellt werden, die in Aufnahmen eines drehbaren Prozessrotors aufgenommen sind. Die zu analysierenden Proben sind in Probenröhrchen eines Probenrotors enthalten. Dem Prozessrotor ist ein Reagenzpipettor zugeordnet und dem Probenrotor ein Probenpipettor. Ein weiterer Rotor, ein Prozessrotor, ist mit Reaktions- oder Messküvetten bestückt.

Bei den nasschemischen Analyseeinrichtungen wird mittels des Reagenzpipettors das analysespezifische Reagenz aus einem der Reagenzienbehälter in einer vorgegebener Menge entnommen und in eine Reaktions- oder Messküvette gefüllt, woraufhin der Probenpipettor eine vorgegebene Menge der Probe entnimmt und der mit dem Reagenz befüllten Mess- oder Reaktionsküvette zuführt. Die auf diese Weise mit einem Reagenz und der Probe beschickte Mess- oder Reaktionsküvette wird mittels des Reaktionsrotors zu einer Messstation verfahren, wo beispielsweise eine photometrische Messung der Reaktionslösung durchgeführt wird, die anschließend ausgewertet wird. Die Abfolgen der einzelnen Pipettierungen können dabei testspezifisch variieren, ferner können auch mehrschrittige Abfolgen auftreten.

Nasschemische Analyseeinrichtungen sind in der Regel für ein hohes Analyseaufkommen ausgelegt, insbesondere auch wegen der Vielzahl der unterschiedlichen Tests als auch wegen der aus medizinisch-diagnostischer Sicht Häufigkeit der Anforderungen.

Für heterogene immunologische Diagnosemethoden sind Analysesysteme gebräuchlich, die mit Standardformaten arbeiten, bei denen Reaktionsbehälter (so genannte "Wells") eingesetzt werden, die innen mit Antikörpern oder Antigenen beschichtet sind (Festphase). Da die biochemische Reaktion nur an der beschichteten Oberfläche stattfindet und nicht gebundenes Material weggewaschen wird, ist die grundsätzliche Prozesssteuerung unterschiedlich zu den klinisch chemischen Tests. Auch sind die erforderlichen Reaktionszeiten bei solchen Tests in der Regel abweichend von klinisch chemischen Tests.

Die US 5,358,691 A1 offenbart ein Analysesystem zur Bestimmung verschiedener Parameter aus dem immundiagnostischen Bereich. Das Analysesystem umfasst mehrere Rotoren, die mit Probengefäßen Reagenzienkassetten, Reaktionsbehältern und Messküvetten bestückt sind. Für die jeweiligen Analysen werden unterschiedliche Messeinheiten eingesetzt. Dieses Analysesystem ist konstruktiv relativ aufwändig und hat einen hohen Platzbedarf.

EP 1 637 886 A1 offenbart ein demgegenüber kompaktes Analysesystem in einer Vielzahl von Ausführungsformen, bei denen jeweils zwei Prozessrotoren zur Aufnahme von Reagenzienkassetten mit zwei unterschiedlichen Reagenzien vorgesehen sind, wobei einer der Prozessrotoren konzentrisch innerhalb eines Reaktionsrotors angeordnet ist, und der andere außerhalb davon. Um den Reaktionsrotor sind verschiedene Bereiche für die die Reagenzienzugabe, Mischen, Messen und Waschen angeordnet.

Die Besonderheit des Analysesystems der US 2009/0004057 A1 besteht darin, dass eine kühlbare Aufbewahrungskammer für Reagenzienbehälter vorgesehen ist. Hierzu ist die Aufbewahrungskammer mit einem Deckel verschließbar und von unten mittels einer Kühleinheit kühlbar. Die Aufbewahrungskammer ist konzentrisch innerhalb eines Reaktionskarussells angeordnet, das mit Reaktionsbehältern bestückt ist. Außerdem ist eine zweite Einheit für Reagenzien in Form eines außerhalb des Reaktionskarussells angeordneten Reagenzienkarussells vorgesehen. Das Analysesystem verfügt über eine optische Messeinheit und über ein Kontroll- und Steuereinrichtung.

Aus der EP 1 310 303 A1 ist eine Reagenzienkassette mit getrennten Kompartimenten bekannt, die Reagenzien für eine bestimmte Bestimmung vorkonditioniert enthalten und transportsicher verschlossen sind.

Die EP 1 255 115 A2 beschreibt eine als Wegwerfartikel ausgeführte Vorrichtung für die Immundiagnostik, bei der ein im Wesentlichen planares Substrat mit einer Aufnahme einer Mikrotiterplatte und mehreren Vertiefungen versehen ist, die zur Aufnahme der Probe und von Testreagenzien dienen.

Aus der US 2002/0085959 A1 ist ein Schrankgerät für die automatisierte Immundiagnostik bekannt, das einen Vorratsraum und ein Transportsystem für Küvetten, einen Aufbewahrungsraum und ein Auswahlsystem für Messproben- und Reaktionsbehälter sowie eine Mess-, Detektions- und Steuereinheit umfasst.

Da bei der klinischen Chemie Reaktionen im gesamten Flüssigkeitsvolumen ablaufen während bei den immunologischen Assays Reaktionen auf der Oberfläche der immobilisierten Festphase (Antikörper, Antigene) ablaufen und daher ein speziell beschichteter Reaktionsbehälter (well) benötigt wird und da auch die optischen Messverfahren im Allgemeinen eine unterschiedliche Ausprägung haben, wurden bisher separate Analyseeinrichtungen für die klinisch-chemische Diagnose einerseits und für die immunlogischen Diagnosemethoden andererseits eingesetzt. Ein kombiniertes Analysesystem wurde erstmals in der EP 1 662 261 A1 vorgeschlagen. Darin wird ein modular aufgebautes Analysesystem beschrieben, bestehend aus einer Zentraleinheit, die für mehrere Analysemodule zuständig ist, die beispielsweise für immunologische, molekulare oder klinisch-chemische Analysen ausgelegt sind. Die zu untersuchenden Proben werden in Probengefäßen in die Zentraleinheit übergeben, wo mittels einer Pipettiereinheit jeweils eine vorgegebene Probenmenge entnommen und in ein Sekundärgefäß abgefüllt wird. Die Sekundärgefäße werden an eine unidirektionale Transporteinrichtung übergeben, bei der es sich Beispiel um ein Förderband, eine Schüttelstrecke oder um Führungsschienen mit Mitnahmeriemen handelt. Je nach diagnostischer Anforderung wird das Sekundärgefäß mittels der Transporteinrichtung in das passende Analysemodul eingeschleust, in der der Inhalt des Sekundärgefäßes analysiert wird. Nach Ablauf des Testes in einem Reaktionsgefäß sind in jedem Analysemodul eine oder mehrere Messeinheiten vorgesehen, mittels denen Eigenschaften des Reaktats, wie etwa Absorption bei einer oder mehreren Lichtwellenlängen; Trübung, Streuung oder Lumineszenz-/Fluoreszenzemission gemessen werden.

Mit diesem Analysesystem wurde die Möglichkeit eröffnet, klinisch chemische und immunologische Diagnosemethoden in einem gemeinsamen Laborarbeitsplatz zu vereinen. Das Analysesystem weist einen zentralen Probeneingang und -ausgang auf, und bewirkt insoweit eine gewisse Vereinfachung. Jedoch handelt es sich hier um eine sequentielle Kopplung klinisch-chemischer und immunologischer Module, die über einen Transportmechanismus zu einem scheinbar einzigen Analysegerät zusammengefasst sind. Der apparative Aufwand für Medienversorgung, Mess-, Heiz- oder Spüleinheiten sowie für Software zur Steuerung und Auswertung wird dadurch kaum verringert. Auch die Geräteabmessungen entsprechen denen, wie sie auch sonst für klinische Laboranalysesysteme typisch sind.

In jüngster Zeit zeigt sich jedoch ein erhöhter Bedarf nach kompakten Analysesystemen, die eine schnelle Diagnose in kleineren Laboreinheiten, direkt am Patientenbett oder in Arztpraxen ermöglichen. Aufwändige und fehleranfällige Vorgänge im Rahmen des Lagerns und Auslieferns von Proben zu einem zentralen Testlabor können so vermieden werden, und die Testergebnisse stehen lokal zur kurzfristigen Therapieentscheidung zur Verfügung. Ferner lassen sich somit die insbesondere in Schwellenländern noch verbreiteten manuellen Test - Abarbeitungsprozesse automatisieren mit deutlich reproduzierbareren und qualitätsgesicherten Ergebnissen. An derartige Analysesysteme, die auch als POC (Point-Of-Care)-Systeme bezeichnet und eingesetzt werden, werden zunehmend höhere Anforderungen an Kompaktheit, einfache Bedienung und Wartung sowie an die Schnelligkeit und Exaktheit der Messergebnisse gestellt.

Aus der DE 41 28 698 A1 ist ein gattungsgemäßes Analyseverfahren zur automatischen Durchführung von heterogenen immunologischen Analysen unter Einsatz eines Ein-Rotoren-Analysesystem bekannt. Das Analysesystem weist eine optische Messstation zur photometrischen, fluorometrischen oder luminometrischen Bestimmung der Analysereaktion. Für die Durchführung der Analyse wird die zu bestimmende Probe in einem Probengefäß bereitgestellt und mittels einer Pipettiervorrichtung, die über einen Hub-/Schwenkeinrichtung bewegt wird, einem Reaktionsbehälter und/oder einer Messküvette zugeführt. Es wird ein Prozessrotor eingesetzt, der eine Vielzahl von Aufnahmen für Proben-, Reagenz- und Reaktionsgefäße für die Bestimmung heterogen immunologischer Parameter aufweist. Jeder Reagenzienkassette ist eine individuelle Messküvette in Form einer Messpipettenspitze und dieser eine Aufnahme im Prozessrotor zugeordnet. Zur Ermittlung des immundiagnostischen Parameters ist die Bildung eines Antikörper-Antigen-Sandwiches beschrieben. Die Reaktion des Antigens mit dem trägerfixierten Antikörper wird durch Absaugen und Waschen gestoppt. Durch Rotation des Prozessrotors um seine Drehachse werden die Messküvetten der im Bereich des Prozessrotors angeordneten optischen Messeinrichtung zugeführt, um dabei mittels eines optischen Messsystems analysiert. Die Messeinrichtung umfasst eine optische Messeinheit zur Bestimmung einer physikalischen Eigenschaft der Probe.

### Technische Aufgabe

Die zuletzt genannte Druckschrift befasst sich ausschließlich mit der automatischen Durchführung immundiagnostischer Analysen.

Der Erfindung liegt die Aufgabe zugrunde, ein Analyseverfahren anzugeben, das eine schnelle und exakte Analyse sowohl klinisch-chemischer als auch homogener und heterogener immunologischer Proben in einem einzigen, einfachen und preiswert zu fertigen Gerät ermöglicht gestattet.

Diese Aufgabe wird ausgehend von dem Verfahren der eingangs genannten Gattung erfindungsgemäß dadurch gelöst,
(a) dass ein Ein-Rotoren-Analysesystem eingesetzt wird, bei dem der Rotor als Prozessrotor ausgebildet ist, der eine Vielzahl von Aufnahmen aufweist, in die jeweils Reagenzienkassetten einer ersten Art und Reagenzienkassetten einer zweiten Art einsetzbar sind, wobei in den Reagenzienkassetten der ersten Art mehrere Reagenzbehälter mit Reagenzien für die Bestimmung klinisch chemischer Parameter, und in den Reagenzienkassetten der zweiten Art mehrere Reagenzbehälter mit Reagenzien für die Bestimmung heterogen immunologischer Parameter zusammengefasst sind., wobei jeder Reagenzienkassette eine individuelle Messküvette und dieser eine Aufnahme im Prozessrotor zugeordnet ist,
(b) dass ein klinisch-chemischer Parameter mittels der Messküvette bestimmt wird, die der Reagenzienkassette der ersten Art zugeordnet ist, wobei die Messküvette als Reaktionsbehälter eingesetzt wird, in dem Reaktionen für die Bestimmung des klinisch-chemischen Parameters ablaufen und
(c) dass ein immundiagnostische Parameter mittels der Messküvette bestimmt wird, die der Reagenzienkassette der zweiten Art zugeordnet ist, wobei die Bestimmung immundiagnostischer Parameter umfasst:
   (c1) Abgeben eines Substrates in den mit der Festphase beschichteten Reaktionsbehälter,
   (c2)Inkubieren des Substrates auf der Festphase unter Umsetzung, und
   (c3)Umpipettieren von dem Reaktionsbehälter in die Messküvette zwecks Messung des umgesetzten Substrats, wobei durch das Umpipettieren eine im Reaktionsbehälter ablaufende Reaktion unmittelbar gestoppt wird,
   wobei durch Rotation des Prozessrotors um seine Drehachse jede der Messküvetten der Messeinrichtung umfassend eine im Bereich des Prozessrotors angeordnete optische Messeinheit für die jeweilige analytische Parameterbestimmung zu verwendende Messeinheit, zugeführt wird, um dabei mittels ein- und desselben optischen Messsystems analysiert zu werden.

Beim erfindungsgemäßen Analyseverfahren wird ein Ein-Rotorensystem eingesetzt, das für die Bestimmung sowohl klinisch-chemischer Parameter als auch für die Bestimmung immundiagnostischer Parameter ausgestattet ist.

Die testspezifischen Reagenzien werden in Reagenzbehältern zur Verfügung gestellt, die modulartig in einer Reagenzienkassette zusammengefasst sind. Die Reagenzienbehälter sind verschlossen und werden erst unmittelbar vor der Entnahme des Reagenz geöffnet, beispielsweise durch Einstechen eines Verschlussdeckels oder einer Folie mittels der Pipettennadel der Pipettiervorrichtung. Die Menge an Reagenz ist für nur einen Test ausgelegt, so dass das Öffnen des Behälters in der Regel irreversibel ist. Nach Abschluss der Bestimmung wird die Reagenzienkassette beziehungsweise werden die Reagenzienkassetten entfernt. Probleme der Entnahme, Handhabung und Haltbarkeit der Reagenzien, wie sie mit größeren Reagenzien-Vorratsgefäßen verbunden sind, entfallen dadurch.

Wesentlich ist, dass das Analysesystem sowohl Reagenzienkassetten beinhaltet, die für die Bestimmung klinisch-chemischer Parameter vorgesehen sind, als auch Reagenzienkassetten, die für die Bestimmung immundiagnostischer Parameter ausgelegt sind, so dass Parameter aus verschiedenen Bereichen der Laboratoriumsmedizin bestimmbar sind.

Jeder Reagenzienkassette ist eine eigene Messküvette mechanisch oder logisch zugeordnet. Die Messküvette ist Teil der Reagenzienkassette oder sie stellt eine separate Komponente dar. Im zuerst genannten Fall handelt es sich um eine Einweg-Messküvette, die zusammen mit der Reagenzienkassette eingesetzt und entfernt wird. Im zuletzt genannten Fall kann es sich auch um eine mehrfach benutzbare Messküvette handeln.

Die Bestimmung des klinisch-chemischen Parameters erfolgt mittels derjenigen Messküvette, die der Reagenzienkassette zugeordnet ist, die zum Durchführen der Analyse des klinisch-chemischen Parameters vorgesehen ist, und umgekehrt erfolgt die Bestimmung des immundiagnostischen Parameters mittels derjenigen Messküvette, die der Reagenzienkassette zugeordnet ist, die zum Durchführen der Analyse des immundiagnostischen Parameters vorgesehen ist. Da somit jede Bestimmung in einer eigenen Messküvette erfolgt, können mehrere Bestimmungen parallel angesetzt und nacheinander zur Messeinrichtung transportiert werden.

Alle im Prozessrotor aufgenommenen Messküvetten werden der Messeinheit allein durch Rotation des Prozessrotors um eine Drehachse zugeführt. Ein separater Transport der Messküvetten ist nicht erforderlich und nicht vorgesehen. Insoweit sind die Messküvetten ortsfest der jeweiligen Reagenzienkassette zugeordnet und werden nur zusammen mit dieser bewegt.

Um dies zu gewährleisten, ist die Messeinheit im Bereich des Prozessrotors angeordnet, beispielsweise unterhalb des Rotors. Wesentlich dabei ist auch, dass alle Messküvetten ein und derselben optischen Messeinheit zugeführt werden und das sie mittels dieser analysierbar sind, unabhängig davon, ob es sich um die Bestimmung eines klinisch-chemischen Parameters oder um die Bestimmung eines immundiagnostischen Parameters handelt.

Die Reagenzienkassetten enthalten die Reagenzienbehälter und optional Funktionsflüssigkeiten, wie Puffer-, Kalibrier-, Qualitätskontroll-, Spül-, Desinfektions- oder Reinigungsflüssigkeiten.

Die Messküvette wird einerseits als Reaktionsbehälter eingesetzt, in dem Reaktionen für die Bestimmung klinisch-chemischer Parameter ablaufen. Andererseits wird die Messküvette bei der Bestimmung immundiagnostischer Parameter derart eingesetzt, dass ein Umpipettieren von einem Reaktionsbehälter in die Messküvette erfolgt, wodurch eine im Reaktionsbehälter ablaufende Nachweis-Reaktion unmittelbar gestoppt wird.

Durch das Umpipettieren in die Messküvette wird die im Reaktionsbehälter ablaufende Reaktion zu einem definierten Zeitpunkt gestoppt, ohne dass Stoppreagenzien eingesetzt werden müssen. Diese können dadurch eingespart werden, und es ergibt sich eine höhere Messgenauigkeit. Insbesondere gewährleistet das Umpipettieren des umgesetzten Substrats vom Reaktionsbehälter in die Messküvette jedoch ein Zusammenführen des Analyse-Strangs der immunologischen und des Analysestranges der klinisch-chemische Bestimmung von Proben in der Messküvette und ermöglicht so die Durchführung beider Bestimmungsmethoden in einem einzigen, einfachen und preiswert zu fertigen Gerät.

Sowohl die Bestimmung des klinisch-chemischen Parameters als die Bestimmung des immundiagnostischen Parameters erfolgt durch fotometrische Messung der Probe in der der jeweiligen Reagenzienkassette zugeordneten Messküvette.

Das Analyseverfahren dient beispielsweise zur dezentralen Bestimmung von POC-Parametern in Serum-, Plasma-, Urin-, oder Liquorproben aus verschiedenen Bereichen der Labormedizin. Auf diese Weise sind für jeden Patienten die individuell notwendigen Untersuchungen schnell und exakt durchführbar, was ein frühzeitiges Einleiten therapeutischer Maßnahmen oder prophylaktische Interventionen ermöglicht. Um den Durchsatz zu erhöhen, können mehrere der Ein-Rotorensysteme zusammengeschaltet werden.

Das Bestimmen des klinisch-chemischen Parameters umfasst im einfachsten Fall folgende Verfahrensschritte:
aa)Aufnehmen der Probe und eines ersten Reagenzes mittels der Pipettiervorrichtung, gegebenenfalls über eine Luftblase getrennt,
bb)Abgeben des ersten Reagenzes und der Probe aus der Pipettiervorrichtung in die Reaktions- beziehungsweise in die Messküvette,
cc) Inkubieren des ersten Reagenzes mit der Probe, wobei das erste Reagenz mit dem in der Probe vorhandenen und nachzuweisenden klinisch-chemischen Parameter zu einem mittels der Messeinrichtung photometrisch nachweisbaren Produkt reagiert.

Zur Bestimmung von immundiagnostischen Parametern wird vorzugsweise eine Reagenzienkassette eingesetzt, die einen Reaktionsbehälter aufweist, der mit einem testspezifischen, vorformulierten Systemreagenz als Festphase vorbefüllt ist.

Ausgehend hiervon umfasst die Bestimmung beispielsweise folgende Verfahrensschritte:
aa) Aufnehmen der Probe und eines Konjugats mittels der Pipettiervorrichtung, gegebenenfalls über eine Luftblase getrennt,
bb)Abgeben von Konjugat und Probe aus der Pipettiervorrichtung auf ein mit einer Festphase beschichtetes Gefäß innerhalb der Reagenzienkassette,
cc) Inkubieren der Festphase mit Konjugat und Probe,
dd) Entfernen überschüssigen Konjugats und Probe durch Waschen der Festphase,
ee)Aufnehmen von Substrat aus einem zweiten Reagenzbehälter mittels der Pipettiervorrichtung,
ff) Abgeben des Substrats aus der Pipettiervorrichtung auf die Festphase,
gg) Inkubieren des Substrates auf der Festphase,
hh) Aufnehmen des umgesetzten Substrats durch die Pipettiervorrichtung,
ii) Abgeben des umgesetzten Substrates aus der Pipettiervorrichtung in die Messküvette,
jj) Messen der Konzentration des umgesetzten Substrates mit Hilfe der Messeinrichtung

Weitere vorteilhafte Ausgestaltungen des erfindungsgemäßen Verfahrens ergeben sich aus den Unteransprüchen. Soweit in den Unteransprüchen angegebene Ausgestaltungen des Analyseverfahrens den in Unteransprüchen zur erfindungsgemäßen Analysevorrichtung genannten Ausführungsformen nachgebildet sind, wird zur ergänzenden Erläuterung auf die obigen Ausführungen zu den entsprechenden Vorrichtungsansprüchen verwiesen.

Das erfindungsgemäße Analyseverfahren ist insbesondere mittels eines portablen Ein-Rotoren-Analysegeräts ausführbar, das im Folgenden näher erläutert wird.

Dieses Ein-Rotoren-Analysesystem ist ausgestattet mit einer Aufnahmevorrichtung für mindestens ein Probengefäß zur Aufnahme der Probe, einem Prozessrotor zur Aufnahme von mindestens einem Reagenzbehälter mit einem darin enthaltenen testspezifischen Reagenz, einer Pipettiervorrichtung, einer Waschstation für die Pipettiervorrichtung, einer Messeinrichtung zur Bestimmung einer physikalischen Eigenschaft der Probe in einer Messküvette, und einer Steuereinheit zur Steuerung des Antriebs des Prozessrotors sowie zur Steuerung des Betriebs der Pipettiervorrichtung und der Messeinrichtung, wobei
(a) der Prozessrotor eine Vielzahl von Aufnahmen aufweist, in die jeweils Reagenzienkassetten einer ersten Art und Reagenzienkassetten einer zweiten Art einsetzbar sind, wobei in den Reagenzienkassetten der ersten Art mehrere Reagenzbehälter mit Reagenzien für die Bestimmung klinisch-chemischer Parameter, und in den Reagenzienkassetten der zweiten Art mehrere Reagenzbehälter mit Reagenzien für die Bestimmung immundiagnostischer Parameter zusammengefasst sind,
(b) wobei jeder Reagenzienkassette eine individuelle Messküvette und dieser eine Aufnahme im Prozessrotor zugeordnet ist, und
(c) wobei die Messeinrichtung eine im Bereich des Prozessrotors angeordnete optische Messeinheit umfasst, die für eine analytische Bestimmung jeder der Messküvetten verwendbar ist, und der die Messküvette zwecks Messung durch Rotation des Prozessrotors um seine Drehachse zugeführt wird.

Das Analysesystem umfasst ein Analysegerät und Reagenzienkassetten. Das Analysegerät kommt mit einem einzigen Rotor - dem Prozessrotor aus, der Reagenzien, Wells sowie Messküvetten enthält, und ist dadurch besonders kompakt und preiswert. Die Rotorform umfasst ringförmige und scheibenförmige Ausführungen.

In jeder Reagenzienkassette sind mehrere Reagenzienbehälter, in denen die testspezifischen Reagenzien zur Verfügung gestellt werden, modulartig zusammengefasst. Die Reagenzienbehälter sind verschlossen und werden erst unmittelbar vor der Entnahme des Reagenz geöffnet, beispielsweise durch Einstechen eines Verschlussdeckels oder einer Folie mittels der Pipettennadel der Pipettiervorrichtung. Die Menge an Reagenz in einer Kassette ist für nur einen Test ausgelegt, so dass das Öffnen des Behälters in der Regel irreversibel ist. Nach Abschluss der Bestimmung wird die Reagenzienkassette beziehungsweise werden die Reagenzienkassetten entfernt. Probleme der Entnahme, Handhabung und Haltbarkeit der Reagenzien, wie sie mit größeren Reagenzien-Vorratsgefäßen verbunden sind, entfallen dadurch und es ergibt sich ein vergleichsweise geringer Platzbedarf. Dies trägt zur Kompaktheit und Bedienungsfreundlichkeit des Analysesystems bei.

Wesentlich dabei ist, dass das Analysesystem sowohl Reagenzienkassetten beinhaltet, die für die Bestimmung klinisch-chemischer Parameter vorgesehen sind (diese werden im Folgenden auch als" Reagenzienkassetten erster Art" bezeichnet), als auch Reagenzienkassetten, die für die Bestimmung immundiagnostischer Parameter ausgelegt sind (diese werden im Folgenden auch als" Reagenzienkassetten zweiter Art" bezeichnet). Dadurch gelingt die Bestimmung von Parametern aus verschiedenen Bereichen der Labordiagnostik in einem einfachen Analysegerät mit nur einem Rotor.

Dazu trägt bei, dass jeder Reagenzienkassette eine eigene, individuelle Messküvette mechanisch oder logisch zugeordnet ist. Die Messküvette ist Teil der Reagenzienkassette oder sie stellt eine separate Komponente innerhalb des Prozessrotors dar.

Im zuerst genannten Fall handelt es sich um eine Einweg-Messküvette, die zusammen mit der Reagenzienkassette eingesetzt und entfernt wird. Im zuletzt genannten Fall kann es sich auch um eine durch vorgesehene Waschprozesse mehrfach benutzbare Messküvette handeln. Vorzugsweise ist die Messküvette relativ zu der dazugehörigen Reagenzienkassette ortsfest, in dem Sinne, dass sie nicht separat, sondern von Anfang bis Ende der Bestimmung zusammen mit der Reagenzienkassette bewegt wird.

So erfolgt insbesondere auch der Transport der Messküvetten zu der optischen Messeinheit allein durch Rotation des Prozessrotors um eine Drehachse. Hierfür ist die Messeinheit im Bereich des Prozessrotors angeordnet, beispielsweise unterhalb des Rotors.

Im Fall klinisch-chemischer Analysen findet in der Messküvette zugleich die testspezifische Reaktion statt, während im immunologischen Fall die Reaktion in einem separaten Gefäß (in einem so genannten "Well") stattfindet und anschließend in diese Messküvette umpipettiert wird.

Jede Bestimmung erfolgt in einer eigenen Messküvette und alle Messküvetten sind nur dem einen Prozessrotor (ortsfest) zugeordnet und mittels diesem zur Messeinheit transportierbar. Es können klinische und immunologische Bestimmungen parallel angesetzt und in einem kleinen, kompakten Analysegerät nacheinander ausgeführt werden.

Wichtig ist in dem Zusammenhang, dass die Messeinrichtung eine optische Messeinheit umfasst, die für eine analytische Bestimmung jeder der Messküvetten verwendbar ist, also sowohl derjenigen Reaktions- und Messküvetten, die den Reagenzienkassetten der ersten Art als auch der Messküvetten, die den Reagenzienkassetten der zweiten Art zugeordnet sind. Alle Messküvetten können der optischen Messeinheit zugeführt werden, und somit sind alle Proben mittels ein- und desselben optischen Messsystems analysierbar. Dadurch entfällt die Notwendigkeit, mehrere Messsysteme für die unterschiedlichen Messmethoden bereitstellen zu müssen, was sich auf die Kompaktheit, Mobilität, Bedien- und Wartungsfreundlichkeit sowie den Preis des Analysesystems vorteilhaft auswirkt.

Die Reagenzienkassetten enthalten die Reagenzienbehälter und optional Funktionsflüssigkeiten, wie Puffer-, Kalibrier-, Qualitätskontroll-, Spül-, Desinfektions- oder Reinigungsflüssigkeiten.

Das Analysegerät ist autark und kann beispielsweise zur dezentralen Bestimmung von POC-Parametern in Serum, Plasma, Liquor oder Urin aus verschiedenen Bereichen der In-vitro-Diagnostik eingesetzt werden, wie beispielsweise zur Bestimmung einer Vielzahl von Metaboliten sowie zum Nachweis generell von Proteinen. Anwendungen liegen z.B. vor bei Erfassung des Leberstatus, Diabetiserkrankungen, bei Herzerkrankungen, Entzündungen, Schwangerschaften, Infektionserkrankungen, viralen Erkrankungen, Allergien, Autoimmunerkrankungen, Krebserkrankungen, therapiebegleitendem Monitoring, Schildrüsenerkrankungen. oder auch bei Drogenmissbrauch.

Das universell einsetzbare Analysesystem erlaubt es, den für jeden Patienten individuell notwendigen Umfang an Untersuchungen schnell und exakt durchzuführen und ermöglicht so ein frühzeitiges Einleiten therapeutischer Maßnahmen oder prophylaktischer Interventionen.

Da alle notwendigen spezifischen Testmaterialien in der Reagenzienkassette vorliegen, und deren Mengen auf einen einzigen Test abgestimmt sind, kann das Analysegerät eine hohe Anzahl unterschiedlicher Tests gleichzeitig oder nacheinander durchführen ohne dass hierfür eine Umbestückung anderer Behälter notwendig ist. Um den Durchsatz an Bestimmungen zu erhöhen, können auch mehrere der Ein-Rotorensysteme zusammengeschaltet werden.

Da die Reagenzien bestimmungsgemäß unmittelbar nach dem Einsetzen der Reagenzienkassette in das Analysegerät verbraucht werden und sich daher nur für kurze Zeit im Gerät befinden, ist eine Kühlung der Kassetten nicht erforderlich. Dies trägt zur Kompaktheit des Analysegeräts, zu seiner einfachen Bedienung als auch zu insgesamt günstigen Gerätekosten bei

Insbesondere im Hinblick auf eine kompakte und vielseitig einsetzbaren Einsatz des Analysesystems hat es sich als vorteilhaft erwiesen, wenn die Messküvette gleichzeitig als Reaktionsbehälter einsetzbar ist, in der Reaktionen für die Bestimmung klinisch-chemischer Parameter ablaufen. Somit wird eine Messküvette verwendet, in der entweder ausschließlich gemessen wird (immunologische Bestimmungen) oder in der zusätzlich auch chemische Reaktionen ablaufen können.

Vorzugsweise sind die Aufnahmen für die Reagenzienkassetten der ersten Art und der zweiten Art baugleich, wobei sie sich in radialer Richtung erstrecken.

Die radiale Erstreckung der Reagenzienkassetten innerhalb des Prozessrotors erlaubt eine Unterbringung auf möglichst engem Raum, was zu einer kompakten Bauweise des Analysesystems beiträgt. Dadurch, dass die Aufnahmen für die Reagenzienkassetten baugleich sind, wird eine optimale Auslastung ermöglicht, da alle Aufnahmen sowohl von Reagenzienkassetten der ersten Art als auch der zweiten Art besetzbar sind.

Es hat sich als günstig erwiesen, wenn die Reagenzbehälter und die Messküvette in linearer Anordnung in jeweils einer der Aufnahmen des Prozessrotors zusammengefasst sind, wobei die Messküvette im Bereich einer Außenseite des Prozessrotors angeordnet ist.

Bei einem scheibenförmigen Prozessrotor liegt die Messküvette beziehungsweise liegen die Messküvetten im Bereich der äußeren Zylindermantelfläche, bei einem ringförmigen Prozessrotor im Bereich der inneren oder der äußeren Zylindermantelfläche. Dementsprechend ist das optische Messsystem angeordnet, wobei der Messstrahl die Messküvette im Allgemeinen seitlich durchstrahlt.

Es hat sich bewährt, wenn mindestens jeweils drei Reagenzbehälter in einer Reagenzienkassette zusammengefasst sind.

Eine Mindestanzahl von drei Reagenzbehältern ist vorteilhaft, weil viele Bestimmungen eine entsprechende Anzahl an Reagenzien oder anderen Funktionsflüssigkeiten erfordern. Diese Bestimmungen könnten bei weniger als drei Reagenzien nicht durchgeführt werden, oder sie müssten in zwei oder mehr Reagenzienkassetten untergebracht werden, was einen höheren Aufwand an Programmierung und Sorgfalt erfordert.

Es wird eine Ausführungsform des Analysesystems bevorzugt, bei der die Reagenzienkassette einen Reaktionsbehälter umfasst, der mit einer testspezifischen Beschichtung versehen ist.

Hierbei weist die Reagenzienkassette zusätzlich zu den mit Reagenzien gefüllten Reagenzbehältern mindestens einen Reaktionsbehälter auf, der mit einer testspezifischen Festphase versehen sein kann. insbesondere auch als Innenbeschichtung dieses Reaktionsbehälters. Die für den spezifischen Test erforderlichen Reaktions- und Pipettierschritte werden dabei nicht in der Messküvette, sondern im Reaktionsbehälter ausgeführt. Zur Durchführung der Messung wird dann vom Reaktionsbehälter in die Messküvette umpipettiert. Derartige Reagenzienkassetten sind insbesondere für heterogen-immunologische Bestimmungen geeignet. Dabei findet gleichzeitig ein Abstoppen der immunologischen Reaktion statt.

Die Messküvette ist vorzugsweise unabhängig von der Reagenzkassette. Bei einer mechanisch mit der Reagenzienkassette verbundenen Messküvette ergibt sich zwar eine einfachere Bestückung des Analysegeräts. Bei einer nicht mechanisch an die Reagenzkassette gebunden Messküvette ergeben sich jedoch größere Freiheiten bei der Produktion der Reagenzkassette, da die Messküvette im Befüllungsprozess nicht stört. Sofern die Messküvette für eine mehrfache Benutzung ausgelegt wird, ist ein Vorteil bei einer separaten Messküvette gegeben. Diese ist dann allerdings aus Verschleppungsgründen sehr sorgfältig zu waschen.

Die Reagenzbehälter können aus flexiblem Material bestehen und beispielsweise in Form von Beuteln ausgeführt sein, die in Umhüllungen aus biegesteifem Werkstoff eingelegt sind. Vorzugsweise bestehen die Reagenzbehälter jedoch aus einem biegesteifen Kunststoff und sind mit einer Folie vakuumdicht verschlossen, die zur Entnahme der Reagenzien mittels der Pipettennadel aufgestoßen wird.

Solche Kassetten sind dabei eindeutig identifizierbar, beispielsweise über Barcodierung angebracht auf der Oberfläche der Folie.

Die Reagenzienkassetten sind hierbei preiswert herstellbar, beispielsweise als Extrusionsspritz- oder Extrusionsblasteile.

Die Messküvette weist bevorzugt planparallele Stirnseiten auf, die als Einstrahlflächen für einen Messstrahl der optischen Messeinheit dienen.

Die Messküvette wird hierbei seitlich durchstrahlt. Dadurch werden Probleme hinsichtlich Justage, Füllstand und Meniskus vermieden, die sich bei einer Durchstrahlung in Richtung der Küvetten-Längsachse ergeben und die zu ungenauen Messergebnissen führen können. Diese Maßnahme trägt somit zur Verlässlichkeit des Messergebnisses und zu einem geringeren Wartungsaufwand bei.

### Ausführungsbeispiel

Die Erfindung wird nachfolgend anhand von Ausführungsbeispielen und einer Zeichnung näher erläutert. In der Zeichnung zeigt:
- **Figur 1**: eine Ausführungsform eines Analysesystems mit einem Analysegerät in Form eines Ein-Rotorensystems und Reagenzienkassetten in dreidimensionaler Ansicht (ohne Gehäuse),
- **Figur 2**: eine Draufsicht auf das Analysegerät in schematischer Darstellung,
- **Figur 3**: eine Reagenzienkassette zum Einsatz im erfindungsgemäßen Analysesystem in einer Seitenansicht und
- **Figur 4**: eine Messküvette zum Einsatz im Analysesystem in dreidimensionaler Ansicht.

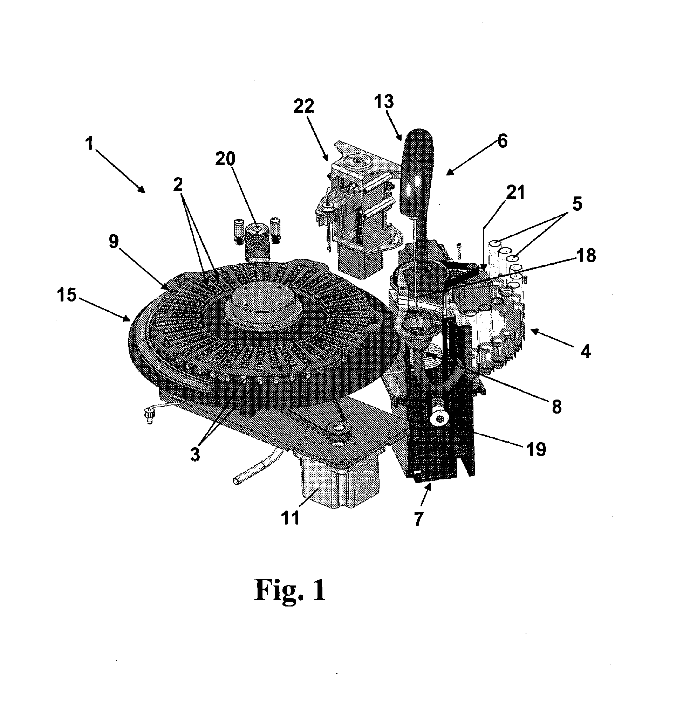

Das in **Figur 1** gezeigte Analysesystem für die medizinische Analytik umfasst ein Analysegerät 1, das als Ein-Rotorensystems ausgeführt ist, eine Vielzahl von Reagenzienkassetten 2 und die gleiche Anzahl von Messküvetten 3.

Die wesentlichen Bauteile des Analysegerätes 1 sind ein optional beheizbarer Prozessrotor 15, ein Aufnahmeteil 4 für Probengefäße 5, eine Pipettiereinrichtung 6, die mit einer Hub-/Schwenkeinrichtung 7 verbunden ist die einen Pipettierarm 13 und ein als Pipettennadel 18 zugespitztes Stahlrohr aufweist, eine Waschstation 8 für die Pipettennadel 18, eine fotometrische Messeinheit 20 mit Detektor, die unterhalb des Prozessrotors 15 angeordnet ist, sowie ein oberhalb des Prozessrotors 15 angeordneter Scanner zur Identifikation der Reagenzienkassetten 2. Zur Steuerung der motorgetriebenen Bewegungen von Prozessrotor 15, Pipettiereinrichtung 6, Hub-/Schwenkeinrichtung 7 sowie für die Probenerkennung, Durchführung und Auswertung der fotometrischen Messung ist eine zentrale Steuereinheit vorgesehen, die innerhalb des Gehäuses des Analysegerätes angeordnet ist.

Der Prozessrotor 15 umfasst einen Aufnahmering 9, der um eine vertikal orientierte Rotationsachse rotierbar ist, und der vierzig gleiche, spaltförmige Öffnungen) zur Aufnahme von Reagenzienkassetten 2 aufweist. Die schlitzförmigen Öffnungen sind in der Darstellung von Figur 1 wegen der darin eingesetzten Reagenzkassetten 2 belegt und nicht erkennbar

Der Aufnahmering 9 wird mittels gesteuerten Schrittmotors 11 angetrieben. Die Öffnungen des Prozessrotors 15 erstrecken sich vom Kreisumfang radial nach innen. Die Öffnungen weisen zusätzlich zu der Aufnahme für die Reagenzienkassette 2 jeweils eine Aufnahmeposition für eine Messküvette 3 auf.

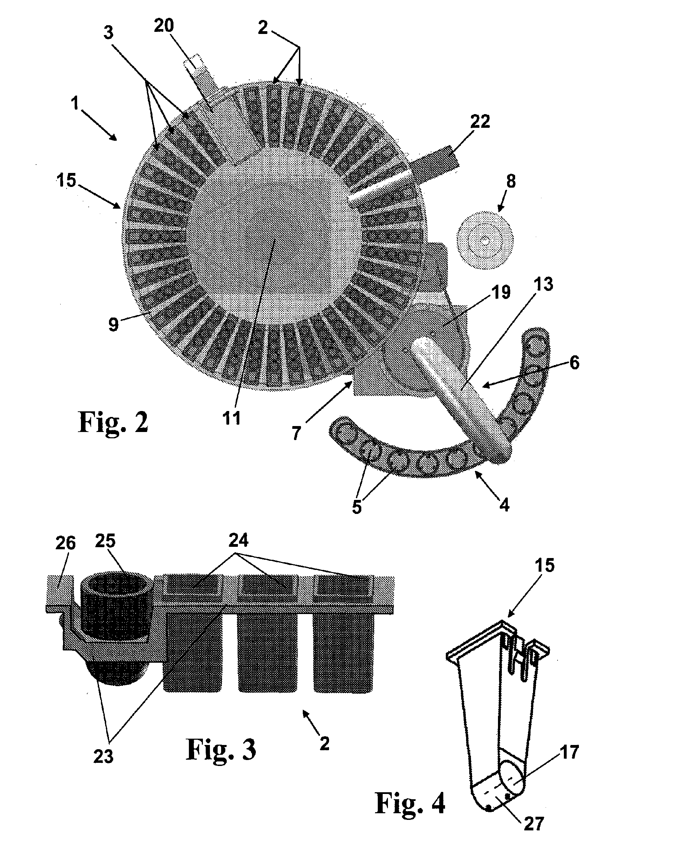

Die Reagenzienkassetten 2 umfassen vier Behälter 24, 25 (siehe Figur 3) aus einem biegesteifen Kunststoff, die in einer Reihe angeordnet und miteinander verbunden sind. In einer Reihe mit einer Reagenzienkassette 2 ist jeweils eine Messküvette 3 an der Zylinderaußenmantelfläche des Prozessrotors 15 angeordnet. Die Länge der Messküvette 3 ist so bemessen, dass sie die Reagenzbehälter 24, 25 überragt, so das an dem überragenden Längenabschnitt die fotometrische Messung vorgenommen werden kann.

Im Aufnahmeteil 4 sind die Probengefäße 5 auf einer Teilkreisbahn angeordnet, deren Mittelpunkt von der Rotationsachse des Pipetierarms 13 gebildet wird.

Die Pipettenwaschstation 8 umfasst ein Waschgefäß mit Ablauf für eine Waschflüssigkeit. Mittels der Pipettenwaschstation 8 wird die Pipettennadel 18 vor jedem Analysevorgang gereinigt.

Die Hub-/Schwenkeinrichtung 7 umfasst ebenfalls einen Schrittmotor 19 sowie einen weiteren Schrittmotor 21, der eine Vertikalbewegung der Pipettiereinrichtung 6 ermöglicht. Mittels dieser Einrichtung ist die Pipettennadel 18 zwischen einer ersten Arbeitsposition auf Seite des Proben-Aufnahmeteils 4 und mehrerer Arbeitspositionen auf Seite des Prozessrotors 15 und einer weitere Arbeitsposition im Bereich der Waschstation 8 reversierend bewegbar. Dabei ist jeder Behälter 24; 25 der Reagenzienkassetten und die Messküvetten 3 durch Rotation des Prozessrotors 15 in den Arbeitsbereich der Pipettiernadel verfahrbar.

Mittels eines Scanners sind die mit einem individuellen Barcode versehenen Reagenzienkassetten 2 identifizierbar. Die Messküvetten 3 können unter Zuhilfenahme der optischen Einheit 20 in ihrer Qualität beurteilt werden.

Weiterhin ist eine Spüleinheit 22 vorgesehen, die dazu dient, einen beschichteten Reaktionsbehälter (25) zu waschen, um das Konjugat und das Probenmaterial nach der immunologischen Reaktion zu entfernen, wie weiter unten noch näher erläutert wird.

Die in **Figur 3** gezeigte Ausführungsform der Reagenzienkassette 2 umfasst insgesamt vier Behälter 24; 25 zur Aufnahme von Reagenzien. Die Reagenzbehälter 24; 25 bestehen aus einem biegesteifen Kunststoff und sind nach oben offen. Im unbenutzten Zustand ist die Öffnung mit einer Folie verschlossen. Die Reagenzbehälter 24, 25 sind mittels Stegen 23 unlösbar miteinander verbunden. Das vordere, dem Zylinderaußenmantel des Prozessrotors 15 zugewandte Ende der Reagenzienkassette 2 ist mit einem Bügel 26 versehen, mittels dem die Reagenzienkassette 2 in eine der Öffnungen des Prozessrotors 3 eingeclipst werden kann.

Grundsätzlich sind alle Behälter 24; 25 für die Aufnahme flüssiger Reagenzien für Bestimmungen auf dem Gebiet der klinischen Chemie und der Immunologie einsetzbar. Der vordere Behält er 25 kann jedoch auch eine Innenbeschichtung mit einer Festphase aufweisen und gleichzeitig als Reaktionsbehälter dienen. Die so ausgestatteten Reagenzienkassette 2 ist insbesondere für immunologische Bestimmungen ausgelegt.

Die in **Figur 4** gezeigte Messküvette 15 weist einen Rundboden 27 und zwei planparallele Seitenwände 17 auf, die bei der Messung vom Messstrahl des optischen Messsystems durchstrahlt werden. Es handelt sich um eine universell einsetzbare Messküvette, in der entweder ausschließlich gemessen wird oder in der zusätzlich auch chemische Reaktionen ablaufen können.

Bei der fotometrischen Messeinheit 20 handelt es sich um eine Messeinheit, die im Durchstrahlverfahren Absorptionen bei zwölf unterschiedlichen Wellenlängen im Bereich zwischen 340nm und 800nm messen kann. Des Weiteren sind turbidimetrische Messungen im gleichen Wellenlängenbereich möglich. Die Messeinheit ist somit für fotometrische Messungen typischer Proben auf dem Gebiet der klinischen Chemie und der Immunologie einsetzbar.

Nachfolgend wird die Funktionsweise des Analysesystems und ein Ausführungsbeispiel für das erfindungsgemäße Verfahren anhand der Figuren 1 bis 4 näher erläutert.

Für eine Serum- oder Plasmaprobe sollen mehrere immunologische und klinisch-chemische Parameter untersucht werden.

Die Probe wird im Probengefäß 5 bereitgestellt und dieses in die Aufnahmevorrichtung 4 eingesetzt. Die zu bestimmenden Parameter werden mittels einer Tastatur eingegeben, woraufhin das Analysegerät 1 die dafür benötigten Reagenzienkassetten 2 anfordert, die zur Identifikation mit einem Barcode versehen sind. Sie werden zusammen mit jeweils einer Messküvette 3, in den Prozessrotor 15 eingesetzt.

Durch Rotation um die Rotationsachse des Prozessrotors 15 werden alle eingesetzten Reagenzienkassetten 2 unter den Scanner 13 geführt, die Informationen der Barcodes ausgelesen und der zentralen Steuereinheit übergeben.

Zur Durchführung einer immunologischen Analyse wird der Prozessrotor 15 beispielsweise mit einer Reagenzienkassette 2 bestückt, bei der einer der Reagenzienbehälter 25 an seiner Innenwandung mit einer Festphase beschichtet ist. Dieser Reagenzbehälter 25 dient gleichzeitig als Reaktionsbehälter. Ein weiterer der Reagenzbehälter 24 der Reagenzienkassette 2 enthält ein Reagenz mit einem Konjugat und ein weiterer der Reagenzbehälter 24 enthält ein Substrat.

Die Hub-/Schwenkeinrichtung 7 fährt die Pipettiereinrichtung 6 aus ihrer Ruheposition zu der ersten Arbeitsposition, an die gleichzeitig das Probengefäß 5 transportiert wird. Die Pipettennadel 18 wird gesteuert über eine Flüssigkeitshöhenerkennung minimal in die Probe eingetaucht und mittels einer (in den Figuren nicht dargestellten) Saugeinrichtung eine vorbestimmte Probenmenge eingesaugt, wobei die Steuerung dieses Ansaugprozesses durch die zentrale Steuereinheit erfolgt.

Daraufhin wird die Pipettennadel 18 angehoben und an ihre zweite Arbeitsposition im Bereich des Prozessrotors 15 verfahren, wobei gleichzeitig der Reagenzbehälter 25 durch Rotation des Prozessrotors 15 an diese Arbeitsposition bewegt wird. Beim Absenken der Pipettennadel 18 durchstößt diese eine Schutzfolie des Reagenzbehälters 25 und nimmt, gegebenenfalls getrennt durch eine Luftblase Reagenz auf.

Anschließend wird gibt die aufgenommene Probe zusammen mit dem Reagenz in das beschichtete Reaktionsgefäß abgegeben.

Die Pipettennadel 18 wird anschließend zur Waschstation 8 bewegt und von innen mit Waschflüssigkeit intensiv gespült und somit gereinigt.

Nach testindividuellen Inkubationszeiten werden die abreagierten Reagenzien mit Hilfe der Spüleinheit 22 aus dem beschichteten Reaktionsbehälter 25 herausgewaschen. Danach werden nacheinander die Reagenzien aus den beiden anderen Reagenzienbehältern 24 mittels der Pipettiereinrichtung 6 entnommen und dem Reaktionsbehälter 25 zugeführt, wobei die Analyseschritte für den spezifischen Test in der zentralen Steuereinheit hinterlegt sind und softwaregesteuert nacheinander abgearbeitet werden.

Nach Abschluss der Reaktion wird die Probe aus dem Reaktionsbehälter 25 in die Messküvette 3 umpipettiert. Dadurch wird die im Reaktionsbehälter zuletzt ablaufende Reaktion unmittelbar gestoppt.

Der Prozessrotor 15 wird daraufhin rotiert, bis sich die Planseiten 17 der Messküvette 15 im Messstrahl der optischen Messeinheit 20 befinden. Dort erfolgt nun auf bekannte Weise die fotometrische Analyse des in der Messküvette 3 enthaltenden Gemischs aus Reagenz und Probe.

Die von der Messeinheit ermittelten Daten werden an die zentrale Steuereinheit weitergeleitet und ausgewertet. Das Messergebnis wird gespeichert und auf einem Display ausgegeben.

Zur Durchführung einer Bestimmung derselben Probe auf dem Gebiet der klinischen Chemie (z.B. Blut - Glukosebestimmung) wird der Prozessrotor 15 beispielsweise mit einer Reagenzienkassette 2 bestückt, bei der der vordere Reagenzienbehälter 25 eine Einheit Glucose Oxidase (GOD) enthält und der nachfolgende Reagenzbehälter 24 eine Einheit Peroxidase (POD). Probennahme, Waschvorgänge, fotometrische Messung, Auswertung und Ausgabe der Messergebnisse erfolgen in ähnlicher Weise wie oben anhand der immunologischen Bestimmung beschrieben, wobei das Waschen des beschichteten Reaktionsbehälters 25 entfällt und die Reaktion direkt in der Messküvette 3 abläuft.

Die mit Reagenz und Probe gefüllte Pipettiernadel wird zur zweiten Arbeitsposition im Bereich des Prozessrotors 15 verfahren, wobei gleichzeitig die Messküvette 3 durch Rotation des Prozessrotors 15 an diese Arbeitsposition bewegt wird. Die Pipettiernadel 18 gibt das Reagenz mit der Probe in die Messküvette 3 ab. Nach einer Inkubationswartezeit wird das zweite Reagenz aus dem Reagenzienbehälter 24 mittels der Pipettiereinrichtung 6 entnommen und dieses ebenfalls der Messküvette 4 zugeführt.

Nach Abschluss der Reaktion wird der Prozessrotor 15 soweit rotiert, dass sich die Planseiten 17 der Messküvette 15 im Messstrahl der optischen Messeinheit 20 befinden, so dass die fotometrische Analyse des in der Messküvette 3 enthaltenden Gemischs aus Reagenz und Probe erfolgen kann. Dabei können sowohl Endpunkts- als auch kinetische Bestimmungen erfolgen.

Die Menge an Reagenzien in den Reagenzienkassetten 2 ist jeweils für eine einzige Bestimmung ausgelegt. Die leeren Reagenzienkassette 2 und die Messküvetten 3 werden nach Abschluss des Analysevorgangs entfernt.

Auf entsprechende Art und Weise ermöglicht das Analysesystem die gleichzeitige Bestimmung einer großen Vielzahl an klinisch chemischen und immunologischen Parametern für mehrere Messproben.

## Patentansprüche

1. Verfahren zur automatisierten Analyse einer Probe, unter Einsatz eines Ein-Rotoren-Analysesystems, indem die zu bestimmende, in einem Probengefäß (5) bereitgestellte Probe mittels einer Pipettiervorrichtung (6), die über eine Hub-/Schwenk-einrichtung (7) bewegt wird, einem Reaktionsbehälter (25) und/oder einer Messküvette (3) zugeführt wird, welche in einem Prozessrotor (15) zusammen mit mindestens einem Reagenzbehälter (24; 25) mit einem darin enthaltenen testspezifischen Reagenz bereitgestellt, und anschließend in der Messküvette (3) nach Durchführung einer testspezifischen Abfolge von Analyseschritten unter Einsatz des mindestens einen Reagenzes einer Messeinrichtung (20) zur Bestimmung einer physikalischen Eigenschaft der Probe zugeführt wird, **dadurch gekennzeichnet,**
(a) **dass** ein Prozessrotor (15) eingesetzt wird, der eine Vielzahl von Aufnahmen (14) aufweist, in die jeweils Reagenzienkassetten (2) einer ersten Art und Reagenzienkassetten (2) einer zweiten Art einsetzbar sind, wobei in den Reagenzienkassetten der ersten Art mehrere Reagenzbehälter (24; 25) mit Reagenzien für die Bestimmung klinisch-chemischer Parameter, beruhend auf Enzymreaktionen und anderen chemischen Reaktionen zum Analysieren von Zuckern, Fetten und Proteinen, und in den Reagenzienkassetten der zweiten Art mehrere Reagenzbehälter (24; 25) mit Reagenzien für die Bestimmung heterogen immunologischer Parameter, beruhend auf spezifischen Wechselwirkungen zwischen Antigenen und Antikörpern unter Verwendung einer Festphase, zusammengefasst sind, wobei jeder Reagenzienkassette (2) eine individuelle Messküvette (3) und dieser eine Aufnahme im Prozessrotor zugeordnet ist,
(b) **dass** ein klinisch-chemischer Parameter mittels der Messküvette (3) bestimmt wird, die der Reagenzienkassette (2) der ersten Art zugeordnet ist, wobei die Messküvette (3) als Reaktionsbehälter eingesetzt wird, in dem Reaktionen für die Bestimmung des klinisch-chemischen Parameters ablaufen und
(c) **dass** ein immundiagnostischer Parameter mittels der Messküvette (3) bestimmt wird, die der Reagenzienkassette (2) der zweiten Art zugeordnet ist, wobei die Bestimmung immundiagnostischer Parameter umfasst:
(c1) Abgeben eines Substrates in den mit der Festphase beschichteten Reaktionsbehälter (25),
(c2) Inkubieren des Substrates auf der Festphase unter Umsetzung, und
(c3) Umpipettieren von dem Reaktionsbehälter (25) in die Messküvette (3) zwecks Messung des umgesetzten Substrats, wobei durch das Umpipettieren eine im Reaktionsbehälter (25) ablaufende Reaktion unmittelbar gestoppt wird,
wobei durch Rotation des Prozessrotors (15) um seine Drehachse jede der Messküvetten (3) der Messeinrichtung (20), umfassend eine im Bereich des Prozessrotors (15) angeordnete optische, für die jeweilige analytische Parameterbestimmung zu verwendende Messeinheit, zugeführt wird, um dabei mittels ein- und desselben optischen Messsystems analysiert zu werden.

2. Verfahren nach Anspruch 1, **dadurch gekennzeichnet, dass** die Reagenzienkassetten (2) der ersten und der zweiten Art baugleich sind.

3. Verfahren nach einem der Ansprüche 1 oder 2, **dadurch gekennzeichnet, dass** die Reagenzbehälter (24; 25) und die Messküvette (3) in linearer Anordnung zusammengefasst sind, und dass die Messküvette (3) im Bereich einer Außenseite des Prozessrotors (15) angeordnet ist.

4. Verfahren nach einem der Ansprüche 1 bis 3, **dadurch gekennzeichnet, dass** eine Reagenzienkassette (2) eingesetzt wird, die einen Reaktionsbehälter (25) aufweist, der mit einem testspezifischen, vorformulierten Systemreagenz als Festphase vorbefüllt ist.

## Claims

1. A method for the automated analysis of a sample using a single-rotor analysis system in that the sample which is to be determined and is provided in a sample vessel (5) is fed by means of a pipetting device (6), which is moved via a lifting/pivoting means (7), to a reaction container (25) and/or a measurement cuvette (3) which is provided in a process rotor (15) together with at least one reagent container (24; 25) with a test-specific reagent contained therein, and is subsequently fed in the measurement cuvette (3) after performance of a test-specific sequence of analytical steps using the at least one reagent to a measurement device (20) for determining a physical property of the sample, **characterized in**
(a) **that** a process rotor (15) is used which comprises a plurality of receiving devices (14) into which reagent cassettes (2) of a first type and reagent cassettes (2) of a second type can respectively be inserted, wherein in the reagent cassettes of the first type a plurality of reagent containers (24; 25) with reagents for the determination of clinical-chemical parameters, based on enzyme reactions and other chemical reactions for analyzing sugars, fast and proteins, and in the reagent cassettes of the second type a plurality of reagent containers (24; 25) with reagents for the determination of heterogeneous-immunological samples, based on specific interactions between antigens and antibodies using a solid phase, are combined, wherein each reagent cassette (2) is associated with an individual measurement cuvette (3) and said measurement cuvette is associated with a receiving device in the process rotor,
(b) **that** a clinical-chemical parameter is determined by means of the measurement cuvette (3) which is associated with the reagent cassette (2) of the first type, wherein the measurement cuvette (3) is used as a reaction container in which reactions for the determination of the clinical-chemical parameters take place and
(c) **that** an immunodiagnostic parameter is determined by means of the measurement cuvette (3) which is associated with the reagent cassette (2) of the second type, wherein the determination of immunodiagnostic parameters includes:
(c1) delivering a substrate into the reaction container (25) coated with the solid phase (25),
(c2) incubating the substrate on the solid phase under conversion, and
(c3) re-pipetting from the reaction container (25) into the measurement cuvette (3) for the purpose of measuring the converted substrate, wherein by re-pipetting a reaction which takes place in the reaction container (25) is immediately stopped,
wherein by rotation of the process rotor (15) about its axis of rotation each of the measurement cuvettes (3) is supplied to the measuring device (20), comprising an optical measuring unit which is arranged in the area of the process rotor (15) and is to be used for the respective analytical parameter determination of the measuring unit to be used, to be thereby analyzed by means of one and the same optical measurement system.

2. The method according to claim 1, **characterized in that** the reagent cassettes (2) of the first and of the second type are of the same construction.

3. The method according to any one of claims 1 or 2, **characterized in that** the reagent containers (24; 25) and the measurement cuvette (3) are combined in linear arrangement, and that the measurement cuvette (3) is arranged in the area of an outside of the process rotor (15).

4. The method according to any one of claims 1 to 3, **characterized in that** a reagent cassette (2) is used which comprises a reaction container (25) which is pre-filled with a test-specific, pre-formulated system reagent as the solid phase.

## Revendications

1. Procédé pour l'analyse automatisée d'un échantillon d'un système d'analyse à un rotor dans le fait que l'échantillon à déterminer et préparé dans un récipient d'échantillon (5) est amené au moyen d'un dispositif de pipettes (6) mobile par un dispositif de levage/pivotement (7), à un récipient de réaction (25) et/ou une cuvette de mesure (3), laquelle est disponible dans un rotor de processus (15) ensemble avec au moins un récipient de réactifs (24 ; 25) contenant un réactif spécifique au test, et ensuite l'échantillon étant placé dans la cuvette de mesure (3) après l'exécution d'une succession d'étapes d'analyse spécifiques au test en utilisant au moins un réactif d'un dispositif de mesure (20) pour déterminer une propriété physique de l'échantillon, caractérisé en ce
a) qu'un rotor de processus (15) est utilisé lequel présente un grand nombre de logements (14), dans lesquels peuvent être introduites des cassettes de réactifs d'un premier type et des cassettes de réactifs (2) d'un second type, dans les cassettes de réactifs du premier type, plusieurs récipients de réactifs (24 ; 25) étant rassemblés avec des réactifs pour la détermination de paramètres clinico-chimiques basés sur des réactions d'enzyme et autres réactions chimiques pour l'analyse de sucres, de graisses, de protéines et dans les cassettes de réactifs du second type, plusieurs récipients de réactifs (24 ; 25) étant rassemblés avec des réactifs pour la détermination de paramètres hétérogènes immunologiques, en se basant sur des interactions spécifiques entre des antigènes et des anticorps en utilisant une phase solide, chaque cassette de réactifs (2) étant associée à une cuvette de mesure individuelle (3) et cette dernière à un logement dans le rotor de processus,
(b) qu'un paramètre clinico-chimique est déterminé au moyen de la cuvette de mesure (3), qui est associée à la cassette de réactifs (2), la cuvette de mesure (3) étant utilisée comme récipient de réactifs dans lequel des réactions se déroulent pour la détermination du paramètre clinico-chimique et
(c) en ce qu'un paramètre immunodiagnostique est déterminé au moyen de la cuvette de mesure (3), qui est associée à la cassette de réactifs (2) du second type, la détermination comprenant des paramètres immunodiagnostiques:
(c1) délivrance d'un substrat dans le récipient de réaction (25) doté de la phase solide,
(c2) incubation du substrat sur la phase solide en réaction, et
(c3) changement de pipettes du récipient de réaction (25) dans la cuvette de mesure (3) en vue d'une mesure de substrat qui a réagi, une réaction se déroulant dans le récipient de réaction (25) étant stoppée directement par le changement de pipettes,
par rotation du rotor de processus (15) autour de son axe de rotation, chaque cuvette de mesure (3) étant amenée au dispositif de mesure (20), comprenant une unité de mesure à utiliser pour la détermination de paramètre analytique respectif, en vue d'analyse au moyen d'un système de mesure unique.

2. Procédé selon la revendication 1, **caractérisé en ce que** les cassettes de réactifs (2) du premier et du second type sont de construction identique.

3. Procédé selon l'une des revendications 1 ou 2, **caractérisé en ce que** les récipients de réactifs (24 ; 25) et la cuvette de mesure (3) sont assemblés en disposition linéaire et **en ce que** la cuvette de mesure (3) est disposée dans la zone d'une face externe d'un rotor de processus (15).

4. Procédé selon l'une des revendications 1 à 3, **caractérisé en ce qu'**il est utilisé une cassette de réactifs, qui présente un récipient de réaction rempli en avance en phase solide d'un réactif de système préformulé et spécifique au test.
